# EUROPÄISCHE PATENTSCHRIFT

(11) **EP 1 121 263 B1**
(45) Veröffentlichungstag und Bekanntmachung des Hinweises auf die Patenterteilung: **12.01.2005**
(21) Anmeldenummer: 00949405.5
(22) Anmeldetag: 26.07.2000
(51) Int. Cl.: B60N 2/16, B60R 22/26

(54) **HÖHENEINSTELLVORRICHTUNG FÜR EINEN FAHRZEUGSITZ**
HEIGHT ADJUSTMENT DEVICE FOR A VEHICLE SEAT
DISPOSITIF DE REGLAGE EN HAUTEUR POUR SIEGE DE VEHICULE

(30) Priorität: 14.08.1999 DE 19938717
(43) Veröffentlichungstag der Anmeldung: 08.08.2001
(73) Patentinhaber: KEIPER GmbH & Co. KG, 67657 Kaiserslautern (DE)
(72) Erfinder: TEUFEL, Ingo, D-67806 Rockenhausen (DE); MÜHLBERGER, Joachim, D-67269 Grünstadt (DE)
(74) Vertreter: Patentanwälte Hosenthien-Held und Dr. Held
(86) Internationale Anmeldenummer: PCT/EP2000/007127
(87) Internationale Veröffentlichungsnummer: WO 2001/012460

(56) Entgegenhaltungen:
- EP-A- 0 300 470
- DE-A- 19 740 043

## Beschreibung

Die Erfindung betrifft eine Höheneinstellvorrichtung für einen Fahrzeugsitz, insbesondere für einen Kraftfahrzeugsitz, mit den Merkmalen des Oberbegriffs des Anspruches 1 und einen Fahrzeugsitz mit den Merkmalen des Oberbegriffs des Anspruches 9.

Bei einem höheneinstellbaren Fahrzeugsitz ist das Gurtschloß für den Sicherheitsgurt am Sitzrahmen befestigt, um sich bei einer Höheneinstellung mitzubewegen. Wirkt im Crashfall eine hohe Zugkraft auf das Gurtschloß, so wird die Befestigungsstelle und der zugehörige Teil der Sitzrahmens sowie der Antrieb stark belastet. Aus der DE 197 40 043 A1 ist eine Höheneinstellvorrichtung dieser Art bekannt, bei der das Gurtschloß an einem L-förmigen Verbindungsteil angebracht ist. Das einstückig ausgebildete Verbindungsteil ist am Ende seines einen Armes am Sitzrahmen angelenkt und weist zwischen der Anlenkstelle und der Befestigungsstelle für das Gurtschloß einen einzelnen Nocken als Eingriffsbereich auf. Im Crashfall schwenkt das Verbindungsteil aufgrund seiner L-Form und drückt den in der Nähe der Schwenkachse befindlichen Nocken in einen Zahnbogen, der an der hinteren Schwinge ausgebildet ist. Aus der EP 0 300 470 A1 ist eine Höheneinstellvorrichtung der eingangs genannten Art bekannt, bei der am Sitzrahmen eine Hebel angelenkt ist, an welchem einerseits ein Gurtschloß angelenkt und andererseits ein Blechstück mit einer Verzahnung angebracht ist, die im Crashfall mit einem am Fahrzeugboden angelenkten Zuganker in Eingriff kommt.

Der Erfindung liegt die Aufgabe zu Grunde, eine Höheneinstellvorrichtung der eingangs genannten Art zu verbessern. Diese Aufgabe wird erfindungsgemäß durch eine Höheneinstellvorrichtung mit den Merkmalen des Anspruches 1 und durch einen Fahrzeugsitz mit den Merkmalen des Anspruches 9 gelöst. Vorteilhafte Ausgestaltungen sind Gegenstand der Unteransprüche.

Eine zweiteilige Ausbildung des Verbindungsteils mit Klinke und Hebel hat den Vorteil, daß die Montage sich vereinfacht. Der Klinke ist dann der Eingriffsbereich zugeordnet, während dem Hebel die Befestigungsstelle für das Gurtschloß zugeordnet ist. Um die Zahl der Bauteile aus Kostengründen so gering wie möglich zu halten, weisen die beiden Teile des Verbindungsteiles je einen Absatz für die Lagerung im Sitzrahmen auf, wobei die Absätze vorzugsweise einstückig mit dem jeweiligen Teil des Verbindungsteils ausgebildet sind und senkrecht zur Drehachse stehen. Die gemeinsame Drehachse der beiden Teile verläuft durch die Mittelpunkte der Absätze. Die beiden Teile sind drehfest miteinander verbunden, damit sie sich gemeinsam ohne Schlupf um die Drehachse drehen, wobei sie vorzugsweise über eine Zahnverbindung oder andere formschlüssige Verbindung miteinander in Eingriff stehen.

Die Anordnung von Hebel und Klinke auf den beiden Seiten des Sitzrahmens hat den Vorteil, daß die Befestigungsstelle für das Gurtschloß frei zugänglich ist, während der Eingriffsbereich geschützt angeordnet werden kann. Durch die Anordnung der Drehachse zwischen dem Eingriffsbereich und der Befestigungsstelle für das Gurtschloß, insbesondere in Längsrichtung des Fahrzeugsitzes gesehen, können der Eingriffsbereich und die Befestigungsstelle besser und auf einfache Weise auf den verschiedenen Seiten des Sitzrahmens angeordnet werden. Zugleich können die Abstände des Eingriffsbereichs und der Befestigungsstelle zur Drehachse je nach gewünschter Hebelwirkung gleich oder unterschiedlich gemacht werden. Dabei ist von Vorteil, wenn der Abstand des Eingriffsbereichs zur Drehachse größer ist als der Abstand der Drehachse zur Befestigungsstelle für das Gurtschloß. Der Eingriffsbereich legt dann einen größeren Weg zurück, muß also beim Normalgebrauch nicht so dicht am Zahnsegment angeordnet werden, so daß kein versehentlicher Eingriff bei bereits leichtem Zug erfolgt.

Um den von der Befestigungsstelle für das Gurtschloß zurückzulegenden Weg gering zu halten, ist es weiter von Vorteil, wenn die Befestigungsstelle in Längsrichtung des Fahrzeugsitzsitzes, also in der normalen Fahrtrichtung des Kraftfahrzeuges, vor der Drehachse angeordnet ist, vorzugsweise auf gleicher Höhe. Bereits nach einer geringen Drehung liegen dann die Befestigungsstelle und die Drehachse auf einer Linie, so daß Zugkräfte in Längsrichtung des Verbindungsteiles übertragen werden können.

Der Eingriffsbereich weist vorzugsweise wenigstens zwei Zähne auf, damit ein sicherer Eingriff erfolgt. Die Zähne des Eingriffsbereichs und des Zahnsegments können spitz zulaufend und, insbesondere die Zähne des Eingriffsbereichs, leicht gebogen oder sägezahnförmig ausgebildet sein, damit eine Stellung "Zahn auf Zahn" vermieden wird.

Im folgenden ist die Erfindung anhand eines in der Zeichnung dargestellten Ausführungsbeispiels näher erläutert. Es zeigen
- Fig. 1: eine Seitenansicht eines erfindungsgemäßen Fahrzeugsitzes,
- Fig. 2: eine ohne Sitzrahmen und Hebel dargestellte Seitensicht eines Teils des Ausführungsbeispiels in der tiefsten Stellung,

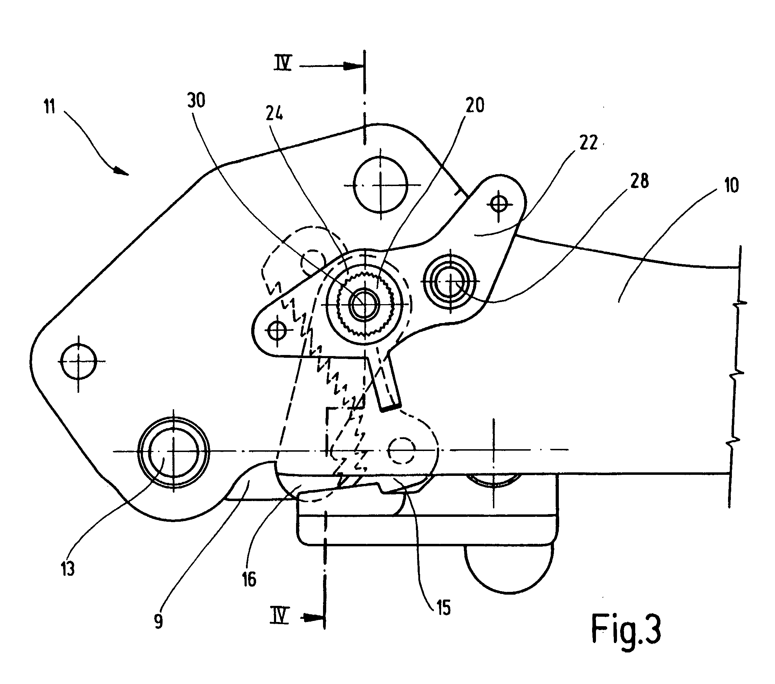

- Fig. 3: eine Seitensicht entsprechend Fig. 2 mit Sitzrahmen und Hebel,

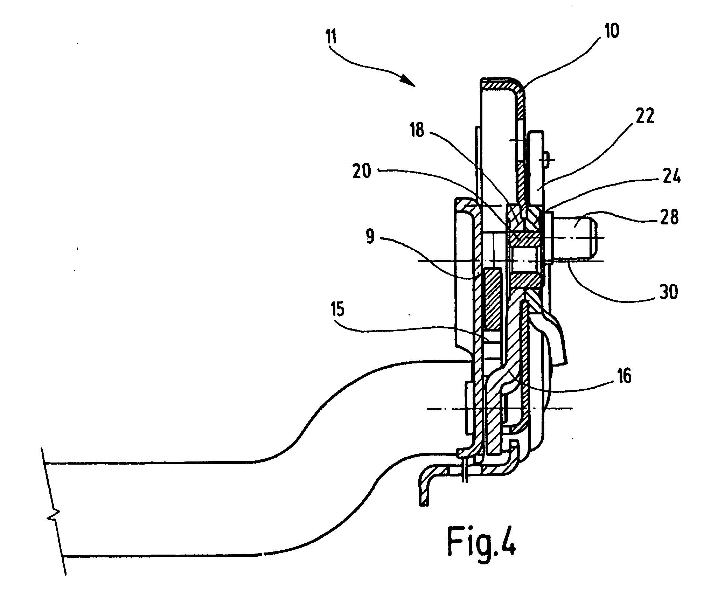

- Fig. 4: einen Schnitt entlang der Linie IV-IV in Fig. 3, und
- Fig. 5: eine Darstellung entsprechend Fig. 2 in der höchsten Stellung.

Ein Fahrzeugsitz 1 eines Kraftfahrzeuges weist auf seinen beiden Seiten je eine sitzstrukturfeste Oberschiene 3 und eine fahrzeugstrukturfeste Unterschiene 5 auf. An jeder Oberschiene 3 sind mit einem Ende je eine vordere Schwinge 7 und je eine hintere Schwinge 9 angelenkt, welche mit ihrem anderen Ende an einem Sitzrahmen 10 angelenkt sind. Die Schwingen 7 und 9 bilden zusammen mit einem nicht näher dargestellten Antrieb eine Höheneinstellvorrichtung 11. Der Sitzrahmen 10 trägt ein in der Zeichnung nur angedeutetes Sitzkissen. Eine ebenfalls nur angedeutete Rükkenlehne ist über Beschläge mit dem Sitzrahmen 10 verbunden.

Im folgenden ist der Einfachheit halber nur die rechte Seite eines als Fahrersitz dienden Fahrzeugsitzes 1 beschrieben. Die hintere Schwinge 9 ist auf der Innenseite des Sitzrahmens 10 angeordnet. Eine horizontale Achse 13, die sich quer zur Längsrichtung des Fahrzeugsitzes 1 von einer Seite des Fahrzeugsitzes 1 zur anderen Seite erstreckt, bildet die Anlenkstelle der hinteren Schwinge 9 am Sitzrahmen 10. An der Schwinge 9 ist auf deren in Querrichtung des Fahrzeugsitzes 1 nach außen gewandten Seite ein Zahnsegment 15 angebracht, dessen Krümmungsmittelpunkt mit der Achse 13 zusammenfällt. Die Schwinge 9 und das Zahnsegment 15 können auch einstückig ausgebildet sein.

Auf der Innenseite des Sitzrahmens 10 ist eine Klinke 16 angeordnet. Die Klinke 16 trägt an ihrem oberen Ende auf der nach außen gewandten Seite einen ringförmigen Absatz 18. Auf dem ringförmigen Absatz 18 ist konzentrisch und mit einem etwas kleineren Durchmesser und einer Außenverzahnung ein Zahnprofil 20 vorgesehen, welches fest in den Absatz 18 eingepreßt ist. Der Absatz 18 ist einstückig mit der Klinke 16 ausgebildet. Die Klinke 16 ist mit dem Absatz 18 in einer Öffnung des Sitzrahmens 10 drehbar gelagert.

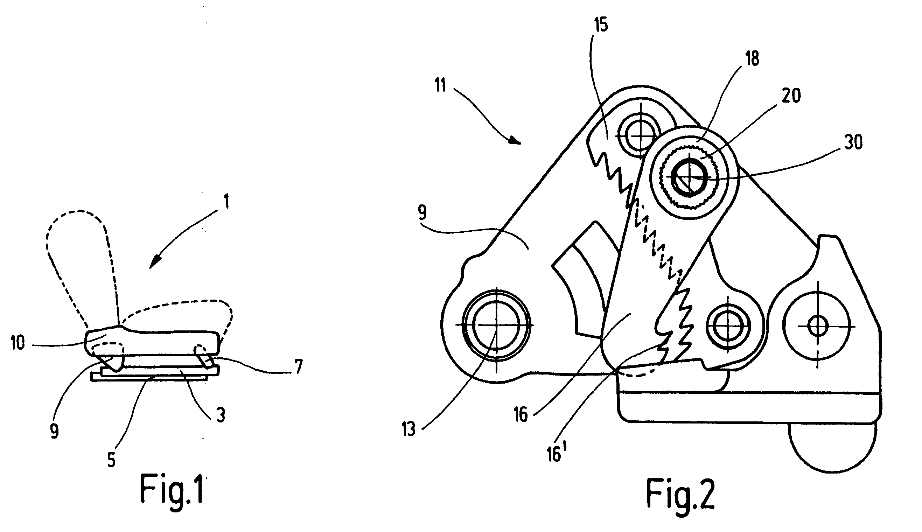

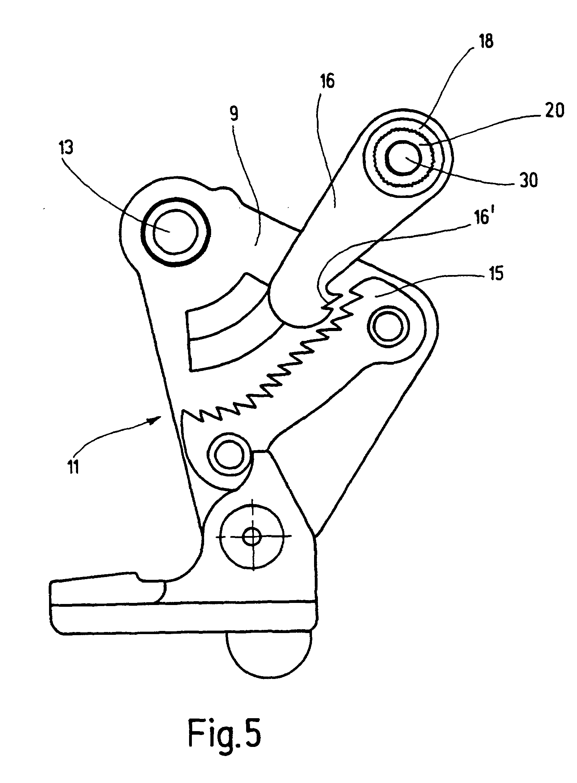

An ihrem unteren, gegenüber den anderen Teilen der Klinke 16 in Querrichtung des Fahrzeugsitzes 1 um die Dicke des Zahnsegments 15 näher zur hinteren Schwinge 9 abgesetzten Ende weist die Klinke 16 zwei Zähne 16' auf. Die Zähne 16' weisen in Schwenkrichtung auf das Zahnsegment 15 zu. Die Zähne 16' sind als Gegenstücke zu den Zähnen des Zahnsegments 15 ausgebildet und bei normalem Gebrauch des Fahrzeugsitzes 1 in geringem Abstand zu diesen Zähnen des Zahnsegments 15 angeordnet. Bei einer Betätigung der Höheneinstellvorrichtung 11 bewegt sich unter anderem die hintere Schwinge 9 relativ zum Sitzrahmen 10. Dadurch bewegt sich auch das Zahnsegment 15 relativ zur Klinke 16. Wie in Fig. 2 und Fig. 5 dargestellt, ist die Klinke 16 in der tiefsten Stellung der Schwinge 9 auf das untere Ende des Zahnsegments 15 und in der höchsten Stellung auf das obere Ende ausgerichtet. Aufgrund der Krümmung des Zahnsegments 15 bleibt der Abstand zwischen den Zähnen 16' und dem Zahnsegment 15 gleich, und die Zähne 16' bleiben auf das Zahnsegment 15 ausgerichtet.

Auf der Außenseite des Sitzrahmens 10 ist ein im wesentlichen flacher Hebel 22 angeordnet. Der Hebel 22 trägt auf der nach innen gewandten Seite einen ringförmigen, weiteren Absatz 24. Der weitere Absatz 24 ist mit einer Innenverzahnung versehen, welche sich über die gesamte Dicke des Hebels 22 erstreckt und in welche das Zahnprofil 20 paßt. Der Hebel 22 ist mit dem weiteren Absatz 24 in der gleichen Bohrung des Sitzrahmens 10 drehbar gelagert wie die Klinke 16, wobei das Zahnprofil 20 ohne Spiel in der Innenverzahnung des weiteren Absatzes 24 steckt. Der Sitzrahmen 10 ist somit zwischen der Klinke 16 und dem Hebel 22 angeordnet, wobei der Hebel 22 und die Klinke 16 drehfest miteinander verbunden sind und ein Verbindungsteil in der Art eines zweiarmigen Hebels bilden. Auf seiner nach außen gewandten Seite trägt der Hebel 22 einen seitlich abstehenden Bolzen 28, der als Befestigungsstelle für ein nicht dargestelltes Gurtschloß für einen Sicherheitsgurt dient.

Die für die Klinke 16 und den Hebel 22 gemeinsame Drehachse 30 verläuft durch den Mittelpunkt der Absätze 18 und 24 und des Zahnprofils 20. Die Drehachse 30 verläuft parallel zur Achse 13 und zum Bolzen 28. Der Abstand zwischen den Zähnen 16' der Klinke 16 und der Drehachse 30 ist größer als der Abstand zwischen der Drehachse 30 und dem Bolzen 28. Der Bolzen 28 und die Drehachse 30 befinden sich ungefähr auf gleicher Höhe bezüglich des vorliegend als Bezugssystem dienenden Fahrzeugbodens, wobei der Bolzen 28 in Längsrichtung des Fahrzeugsitzes 1 vor der Drehachse angeordnet ist.

Wird im Falle einer scharfen Bremsung oder eines Crashs der Sicherheitsgurt belastet, d.h. ein Zug auf das Gurtschloß gegeben, so zieht das Gurtschloß am Bolzen 28 nach oben. Der Hebel 22 dreht sich dadurch um die Drehachse 30. Die Verzahnung zwischen dem Hebel 22 und der Klinke 16 mit dem Zahnprofil 20 bewirkt, daß sich die Klinke 16 ebenfalls dreht. Durch die Drehung der Klinke 16 werden die Zähne 16' auf das Zahnsegment 15 zu geschwenkt und gelangen in Eingriff mit dessen Zähnen. Eine spitz zulaufende und leicht gebogene Form der Zähne 16' und eine entsprechende Form der Zähne des Zahnsegments 15 bewirkt, daß eine Stellung "Zahn auf Zahn" unter leichter Drehung der Klinke 16 in eine Stellung "im Eingriff" übergeht.

Die auf das Gurtschloß wirkenden Zugkräfte werden nun direkt in die hintere Schwinge 9 eingeleitet, ohne den zwischen hinterer Schwinge 9 und Sitzrahmen 10 wirkenden Antrieb der Höheneinstellvorrichtung 11 zu belasten. Der Hebel 22 und die Klinke 16 wirken zusammen als Verbindungsteil zwischen dem Gurtschloß und der hinteren Schwinge 9. Die Zähne 16' bilden einen Eingriffsbereich der Klinke 16.

## Patentansprüche

1. Höheneinstellvorrichtung für einen Fahrzeugsitz, insbesondere für einen Kraftfahrzeugsitz, mit einer an einem Sitzrahmen (10) angelenkten Schwinge (9), welche ein Zahnsegment (15) trägt, und einem am Sitzrahmen (10) angeordneten, um eine Drehachse (30) relativ zum Sitzrahmen (10) drehbaren Verbindungsteil (16, 22) mit einer Befestigungsstelle (28) für ein Gurtschloß, wobei das Verbindungsteil (16, 22) einen Eingriffsbereich (16') aufweist, der im Crashfall mit dem Zahnsegment (15) zusammenwirkt, und die Drehachse (30) zwischen dem Eingriffsbereich (16') und der Befestigungsstelle (28) für das Gurtschloß angeordnet ist, **dadurch gekennzeichnet, daß** das Verbindungsteil (16, 22) zweiteilig ausgebildet ist mit einem Hebel (22), welcher die Befestigungsstelle (28) aufweist, und einer Klinke (16), welche den Eingriffsbereich aufweist, wobei der Hebel (22) und die Klinke (16) drehfest miteinander verbunden sind und je einen Absatz (18, 24) aufweisen zur drehbaren Lagerung in der gleichen Bohrung des Sitzrahmens (10), welcher zwischen der Klinke (16) und dem Hebel (22) angeordnet ist.

2. Höheneinstellvorrichtung nach Anspruch 1, **dadurch gekennzeichnet, daß** der Abstand zwischen dem Eingriffsbereich (16') und der Drehachse (30) größer ist als der Abstand zwischen der Drehachse (30) und der Befestigungsstelle (28) für das Gurtschloß.

3. Höheneinstellvorrichtung nach Anspruch 1 oder 2, **dadurch gekennzeichnet, daß** die Befestigungsstelle (28) für das Gurtschloß in Längsrichtung des Fahrzeugsitzes (1) vor der Drehachse (30) angeordnet ist.

4. Höheneinstellvorrichtung nach einem der Ansprüche 1 bis 3, **dadurch gekennzeichnet, daß** die Befestigungsstelle (28) für das Gurtschloß und die Drehachse (30) sich ungefähr auf gleicher Höhe befinden.

5. Höheneinstellvorrichtung nach einem der Ansprüche 1 bis 4, **dadurch gekennzeichnet, daß** der Eingriffsbereich (16') wenigstens zwei Zähne aufweist.

6. Höheneinstellvorrichtung nach einem der Ansprüche 1 bis 5, **dadurch gekennzeichnet, daß** der Absatz (18) der Klinke (16) einstückig mit der Klinke (16) und der Absatz (24) des Hebels (22) einstückig mit dem Hebel (22) ausgebildet ist.

7. Höheneinstellvorrichtung nach einem der Ansprüche 1 bis 6, **dadurch gekennzeichnet, daß** der Hebel (22) und die Klinke (16) über eine Zahnverbindung miteinander in Eingriff stehen.

8. Höheneinstellvorrichtung nach einem der Ansprüche 1 bis 7, **dadurch gekennzeichnet, daß** der Hebel (22) auf der Außenseite des Sitzrahmens (10) und die Klinke (16) auf der Innenseite des Sitzrahmens (10) angeordnet ist.

9. Fahrzeugsitz mit einer Höheneinstellvorrichtung nach einem der Ansprüche 1 bis 8.

## Claims

1. Height adjustment device for a vehicle seat, in particular for a motor vehicle seat, having a rocker (9) which is articulated to a seat frame (10) and which carries a toothed segment (15), and having a connection member (16, 22) which is arranged on the seat frame (10) and which can be rotated about an axis of rotation (30) relative to the seat frame (10) and which has a securing point (28) for a belt lock, the connection member (16, 22) having an engagement region (16') which co-operates with the toothed segment (15) in the event of a crash, and the axis of rotation (30) being arranged between the engagement region (16') and the securing point (28) for the belt lock, **characterised in that** the connection member (16, 22) is constructed in two parts with a lever (22), which has the securing point (28), and a detent (16), which has the engagement region, the lever (22) and the detent (16) being connected to each other in a rotationally secure manner and each having a shoulder (18, 24) for rotatably supporting the seat frame (10) in the same hole, which seat frame (10) is arranged between the detent (16) and the lever (22).

2. Height adjustment device according to claim 1, **characterised in that** the spacing between the engagement region (16') and the axis of rotation (30) is greater than the spacing between the axis of rotation (30) and the securing point (28) for the belt lock.

3. Height adjustment device according to claim 1 or 2, **characterised in that** the securing point (28) for the belt lock is arranged before the axis of rotation (30) in the longitudinal direction of the vehicle seat (1).

4. Height adjustment device according to any one of claims 1 to 3, **characterised in that** the securing point (28) for the belt lock and the axis of rotation (30) are located approximately at the same height.

5. Height adjustment device according to any one of claims 1 to 4, **characterised in that** the engagement region (16') has at least two teeth.

6. Height adjustment device according to any one of claims 1 to 5, **characterised in that** the shoulder (18) of the detent (16) is constructed in one piece with the detent (16), and the shoulder (24) of the lever (22) is constructed in one piece with the lever (22).

7. Height adjustment device according to any one of claims 1 to 6, **characterised in that** the lever (22) and the detent (16) are in engagement with each other by way of a toothed connection.

8. Height adjustment device according to any one of claims 1 to 7, **characterised in that** the lever (22) is arranged on the outer side of the seat frame (10), and the detent (16) is arranged on the inner side of the seat frame (10).

9. Vehicle seat having a height adjustment device according to any one of claims 1 to 8.

## Revendications

1. Dispositif de réglage en hauteur pour un siège de véhicule, en particulier pour un siège de véhicule automobile, comportant une pièce oscillante (9) articulée sur un bâti de siège (10) et portant un segment denté (15), et une pièce de liaison (16, 22) disposée sur le bâti du siège (10), pouvant tourner relativement au bâti de siège (10) autour d'un axe de rotation (30), avec un point de fixation (28) pour une serrure de ceinture, la pièce de liaison (16, 22) présentant une zone d'engrènement (16') qui coopère avec le segment denté (15) en cas de choc et l'axe de rotation (30) étant disposé entre la zone d'engrènement (16') et le point de fixation (28) pour la serrure de ceinture, **caractérisé par le fait que** la pièce de liaison (16, 22) est formée de deux parties avec un levier (22) qui présente le point de fixation (28) et un cliquet (16) qui présente la zone d'engrènement, le levier (22) et le cliquet (16) étant reliés l'un à l'autre d'une manière résistant à la rotation et présentant chacun un épaulement (18, 24) pour le montage rotatif dans le même orifice du bâti de siège (10), disposé entre le cliquet (16) et le levier (22).

2. Dispositif de réglage en hauteur selon la revendication 1, **caractérisé par le fait que** l'écart entre la zone d'engrènement (16') et l'axe de rotation (30) est plus grand que l'écart entre l'axe de rotation (30) et le point de fixation (28) pour la serrure de ceinture.

3. Dispositif de réglage en hauteur selon l'une des revendications 1 ou 2, **caractérisé par le fait que** le point de fixation (28) pour la serrure de ceinture est disposé, dans la direction longitudinale du siège de véhicule (1), avant l'axe de rotation (30).

4. Dispositif de réglage en hauteur selon l'une des revendications 1 à 3, **caractérisé par le fait que** le point de fixation (28) pour la serrure de ceinture et l'axe de rotation (30) se trouvent environ à la même hauteur.

5. Dispositif de réglage en hauteur selon l'une des revendications 1 à 4, **caractérisé par le fait que** la zone d'engrènement (16') présente au moins deux dents.

6. Dispositif de réglage en hauteur selon l'une des revendications 1 à 5, **caractérisé par le fait que** l'épaulement (18) du cliquet (16) est formé d'un seul tenant avec le cliquet (16) et l'épaulement (24) du levier (22) est formé d'un seul tenant avec le levier (22).

7. Dispositif de réglage en hauteur selon l'une des revendications 1 à 6, **caractérisé par le fait que** le levier (22) et le cliquet (16) sont en prise l'un avec l'autre par l'intermédiaire d'un assemblage à denture.

8. Dispositif de réglage en hauteur selon l'une des revendications 1 à 7, **caractérisé par le fait que** le levier (22) est disposé du côté extérieur du bâti de siège (10) et le cliquet (16) du côté intérieur du bâti de siège (10).

9. Siège de véhicule avec un dispositif de réglage en hauteur tel que défini à l'une des revendications 1 à 8.
